# EUROPEAN PATENT SPECIFICATION

(11) **EP 1 115 293 B1**
(45) Date of publication and mention of the grant of the patent: **17.12.2003**
(21) Application number: 99942786.7
(22) Date of filing: 16.09.1999
(51) Int. Cl.: A22B 5/20

(54) **APPARATUS AND METHOD FOR CUTTING UP THE BELLY OF A SLAUGHTERED ANIMAL AND USE THEREOF**
VORRICHTUNG UND VERFAHREN ZUM Auftrennen des Bauches von Schlachtkörpern und deren VERWENDUNG
APPAREIL ET PROCEDE PERMETTANT DE DECOUPER LE VENTRE D'UN ANIMAL ABATTU ET UTILISATION DE CET APPAREIL

(30) Priority: 25.09.1998 DK 121398
(43) Date of publication of application: 18.07.2001
(73) Proprietor: SFK-DANFOTECH A/S, 9100 Aalborg (DK)
(72) Inventor: NIELSEN, Bjarne, DK-9200 Aalborg SV (DK)
(74) Representative: Larsen, Hans Ole
(86) International application number: DK9900491
(87) International publication number: WO00018244

(56) References cited:
- EP-A1- 0 743 006
- WO-A1-93/01725
- DK-B- 164 383
- US-A- 637 490
- US-A- 5 160 295

## Description

The invention concerns an apparatus for cutting up the belly of a slaughtered animal, comprising first means for the implementation of the cutting function and a first element which during the cutting process is placed under the surface of the belly, said apparatus also comprising a displacement element which during the cutting process applies a force to a predetermined area on the outer surface of the animal's belly and at a distance from the first means. The invention also comprises a method for cutting up the belly of a pig with a cutting apparatus, and the use of both the apparatus and the method.

In connection with the slaughtering of pigs, it is desirable that the cutting up and parting of the carcass is effected in a manner which is as automated as possible. Today, the known stations and handling equipment involve that the animal, after various preparations, including work carried out first on areas around the head and rectum, is then cut up along the belly. Up until the present, it has been possible to carry out this cutting up of the belly only in a semi-automated manner, in the sense that the belly area comprises areas of a more difficult character, in that the actual cutting up process must take place in a way which is as contamination-free as at all possible. For example, during the cutting up of the male pigs, no cutting through of the penis must take place, in that this will give rise to a contamination of the meat due to the high bacteriological content of the penis. Therefore, today there is preferably carried out a cutting up of the pig in the belly area without the cutting of the actual penis area, in that this function is effected manually later, where a cutting up around the penis with associated organs is carried out. In this way the contamination is avoided. Such a process is naturally time-consuming and gives rise to the use of many man-hours.

From WO93/01725 there is known a process method for cutting up the belly of a slaughtered animal. The method does not disclose how the cutting up around the penis is possible, and thus does not solve the above-mentioned problem.

From EP-A-743006 there is known an apparatus for displacement of e.g. the penis, which works by establishing a vacuum in an area of the pig's belly in order to effect a displacement in this manner. This element does not constitute an integral part of the cutting apparatus, and it will give rise to a disturbance of the cutting process because a suction cup which effects this operation requires a certain period of time in order to function, which means that the cutting is effected abruptly and discontinuously. Moreover, since the displacement element does not constitute a integral part of the cutting arrangement, a setting is required for each individual pig in order for the displacement to be carried out in the right place.

From DK-B-164383 there is also known an apparatus for displacement of the penis, in that this functions during the cutting process, but where this displacement comprises a rotating cone having a direction of rotation which in the first place is at right-angles to the cutting plane, and secondly the cone gives rise to a small degree of abutment, and where a displacement of the organ is effected by the skin being drawn away by the rotation of the cone. Moreover, since the direction of the apex of the cone is in the cutting direction, there is a risk of this boring itself down into the pig's belly during the cutting process. Also, if the abutment is not firm enough, there is a risk that the desired displacement of the organ does not take place. Finally, this will also give rise to a certain discontinuity in the cutting process as a consequence of the displacement not taking place in a gliding movement together with the cutting, but is effected as an abrupt movement at the moment that the cutting arrangement is required to pass the penis area.

It is thus desirable to develop an apparatus whereby it is possible to carry out the cutting through of the whole of the belly, without the subsequent necessity of having to effect the final cutting up either manually or at another station, and where a safe displacement of the penis is effected without the continuity of the cutting process being interrupted.

This object is achieved with an apparatus of the kind disclosed in the introduction, and where the displacement element comprises a wheel which is mounted on an axle on which it can rotate, said wheel being provided with friction-increasing means along its outer circumference/periphery, and where the axle is mounted in such a manner that, during the cutting, the wheel turns in the same direction as the cutting.

The manner in which the apparatus functions is that when the slaughtered animal has been prepared and subsequently hung up for the cutting up of the belly, the apparatus is moved forward into its start position during which a movable knife is inserted in the start area and has contact against the rear of the belly wall. This knife co-operates with an upper knife which is stationary, and the belly is now cut up by a movement upwards. When the knives have reached a certain distance from the penis, there occurs an activation of an element which is preferably configured as disclosed in claim 3, and which is slid forward and transfers a force to the surface of the pig's belly in an area which lies in front of that area where the cutting up has already taken place, and displaced to the side of the line along which the actual cutting advances. The force is applied horizontally at a distance of approx. 25-35 mm from the cutting line, either to the one side or the other, and at a vertical distance of approx. 100 mm to where the scissors function has reached when the element is activated.

During the application of this force, there occurs a displacement of the skin which in turn will give rise to a displacement of the penis for a certain distance depending on the strength of the force, i.e. the greater the force, the greater the displacement of the penis. Here it is important that the displacement is so strong that the penis is displaced away from the further advance of the cutting line. All of this is effected in a continuous process, so that the force is moved forward at the same time that the cutting continues, and where the rotation of the wheel ensures that there is no counteraction against the cutting movement. The friction-increasing means ensure a good grip on the skin and herewith a positive displacement of the penis area. The cutting process is effected in a continuous upwards movement, and without the force on the belly hindering the movement, in that the wheel ensures that there is no counter effect on the movement. When the knives have passed the penis area, the displacement element will return to its start position, after which there is no longer any force applied to the skin, and this will fall back to its normal position. The knife continues its further advance. In this manner, a continuous and fully automatic cutting up of the belly is achieved.

By providing an apparatus according to the invention and as further disclosed in claim 2, it is achieved that the force on the pig's belly is transferred in an optimum manner.

By providing an apparatus according to he invention and as further disclosed in claim 3, it is achieved by means of teeth or serrations along the periphery of the wheel, which are in contact with the belly during the cutting, that the friction is optimised so that the greatest possible displacement force is transferred from the wheel to the belly.

By providing an apparatus according to the invention and as further disclosed in claim 4, it is achieved that during the cutting function the knife can be moved into the belly in a start position and at the correct angle, and is moved up in a position in such a manner that it can co-operate with the upper knife in a cutting movement-upwards. Upon abutment with the breast bone, the lower knife can effect one or more scissors movements, whereby the breast bone is cut over.

By providing an apparatus according to the invention and as further disclosed in claim 5, it is ensured that the lower knife can effect two functions, i.e. not only the earlier-mentioned cutting function, but also function as a counter-stop during the influence of the force from the displacement element, so that the displacement is effected. There is hereby achieved a simple apparatus, in that two functions thus co-operate in one and the same part.

By providing an apparatus according to the invention and as further disclosed in claim 6, it is achieved that the cutting process can take place without the occurrence of any friction which may hinder the movement between the handling element and the knife itself, at the same time that the position of the element is controlled in a simple manner.

The invention also concerns a method for the cutting up of the belly of a slaughtered animal with a cutting apparatus,
said cutting apparatus comprising an element which is moved forward at a first angle to a position of abutment in and under the pig's belly, and cutting means for effecting the cutting function,
said cutting apparatus with the element being moved in a vertical cutting movement for the cutting up of the belly,
said element comprising an integral part of the cutting means comprising a lower knife,
said cutting apparatus comprising a displacement element which, during the cutting, is activated and applies a force to the outer surface of the animal's belly in an area lying in front of that area where the cutting up has taken place, and displaced to the one side in relation to the vertical cutting line, and whereby said force displaces the skin and associated organs,
and whereby the force is applied by means of a wheel which can be rotated, the periphery of said wheel having friction means, and where during the displacement said wheel turns in the same direction as the cutting direction.

The method can with advantage be exercised using the apparatus as disclosed in claims 1 to 6.

Claims 8 and 9 disclose further expedient process steps in connection with the method disclosed in claim 7.

By making use of the further process step as described in claim 8, an effective cutting-over of the breast bone is achieved, and by using the process step as disclosed in claim 9 it is achieved that the continuous movement is not hindered in any way.

The invention also concerns the use of the method and apparatus in the manner disclosed in claim 10.

The invention will now be explained in more detail with reference to the drawing, where
- fig. 1: shows the apparatus according to the invention seen from the side along the centre axis,
- fig. 2: shows the apparatus seen in fig. 1, where the displacement element is in its forwardly-directed position,
- fig. 3: shows the arm on which the apparatus for cutting-up is mounted,
- fig. 4: shows a perspective view of the cutting apparatus in its start position, and
- fig. 5: schematically shows a section of the positioning of the force and the knife in relation to the belly of the animal.

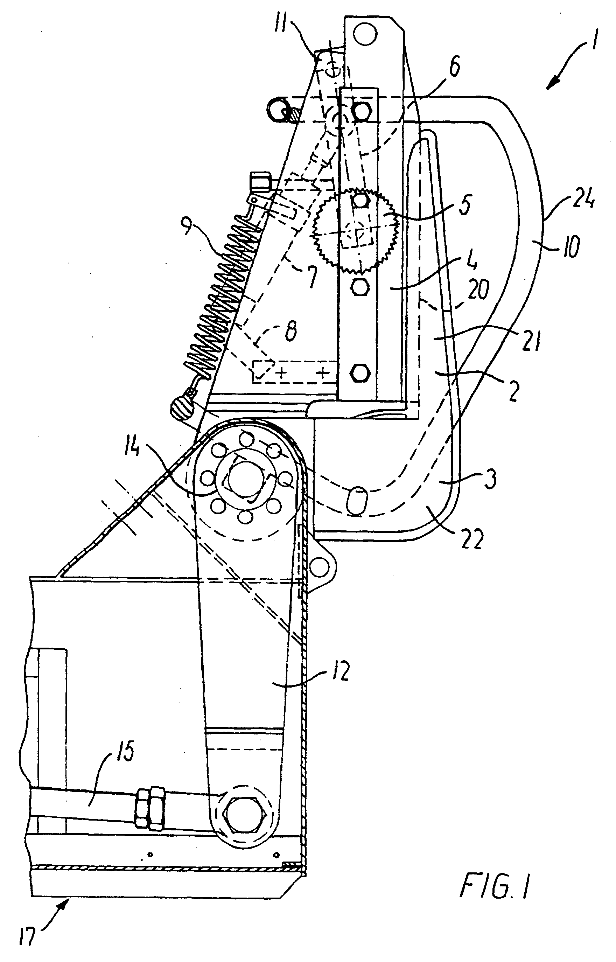

Fig. 1 shows an example embodiment of the apparatus 1 according to the invention. The apparatus 1 is mounted on an arm 17 which serves to move the cutting element with displacement element 5 into its correct position. The apparatus 1 comprises first means 2 which consist of a lower knife 3 and an upper knife 4. The lower knife 3 is movable in relation to the upper knife 4, whereby the two knives co-operate like a pair of scissors, partly by cutting up under the belly, and partly by a snapping movement of the lower knife against the upper knife to generate a strong force for the cutting over of areas which are difficult to pass, for example the breast bone. In fig. 5, the lower knife 3 is seen in section, from which it will be seen that this has a recess 20 in its blade into which the upper knife 4 passes down. The lower knife is thus U-shaped in cross-section.

As mentioned, the lower knife consists of a blade 21 which is integrated with an under part 22, said under part in turn being connected to a link connection 14 (a pivot link which pivots around an axle), said link connection 14 being connected to a cylinder 15 via a third arm 12. When the cylinder 15 is activated and carries out a displacement movement forwards and backwards, this results in a movement of the arm 12 which is connected in a hinged manner to this cylinder so that the arm can pivot 90°, whereby in the link 14 a force is transferred to the lower knife 3, which can thus be angled in relation to the vertical plane. This is of significance when the apparatus is to carry out its cutting-up of a slaughtered animal, in that the lower knife 3 then has an angle of approx. 35° in relation to the vertical plane in order for it to be directed in under the belly, and thereafter turned up to almost the vertical position, after which the cutting process can be effected.

The upper knife 4 comprises a sharp edge directed forward towards the lower knife 3 and which passes down in the recess 20 discussed earlier, said upper knife being fixed and mounted on the apparatus in a stationary manner. The apparatus also comprises a displacement element 5 which is preferably configured as a rotating/pivotal wheel with teeth around its periphery. The object of the teeth is to increase the friction between the animal carcass and the wheel, so that a greater and more concrete force can be transferred when the displacement element 5 is activated. The breadth of the wheel is typically 2-3 mm, but can be of breadths of up to 10-15 mm. The diameter is in the order of 100 mm. By making the wheel narrow, a precise transfer of the force is attained and, all else being equal, a greater pressure.

The displacement element 5 is mounted on a first arm 6, which in turn is in connection with a first cylinder 7 which is fastened lowermost to a second arm 8 which is otherwise in stationary connection with the apparatus 1. When the cylinder 7 is activated, as a result of its fixture to and about halfway along the arm 6, the upper part of said arm 6 being secured in a pivotal manner to the apparatus 1 at a pivot point 11, this activation will result in the arm 6 being displaced quickly forward, whereby the wheel 5 moves forward into an approximately horizontal position, and with its abutment against the belly gives rise to the application of a force This force is shown in fig. 5, where the wheel is in its position of abutment against the skin, and where it is seen that this gives rise to a lateral force which displaces the penis away from the cut which is effected by the knife. A cutting-up through the penis 19 is hereby avoided.

It is thus important that the displacement apparatus constitutes an integral part of the cutting arrangement, so that it is not necessary to carry out individual adjustments of the displacement apparatus in relation to the cutting arrangement when the slaughtered animals are not of uniform size.

The apparatus 1 further comprises two yokes 10, of which only one is seen in fig. 1 due to the position of the shown section. The yokes 10 have a rounded profile and are connected to the apparatus 1 at a pivot point 23, and are fixed at the other end to a second cylinder 9, for example in the form of a spring. When the spring is activated, which happens synchronously with the advance of the cut, this will cause the yokes 10 to be moved in a rolling movement, and since the rearmost position of these is in abutment against the animal's belly, the result of the rolling movement is that the pig is secured via the position of the yoke on the belly and the position under the belly of the lower knife 3. In this way, the pig is secured and handled during the cutting up, and since the yoke is movable as described above, there will not arise any friction during the processing of the slaughtered animal.

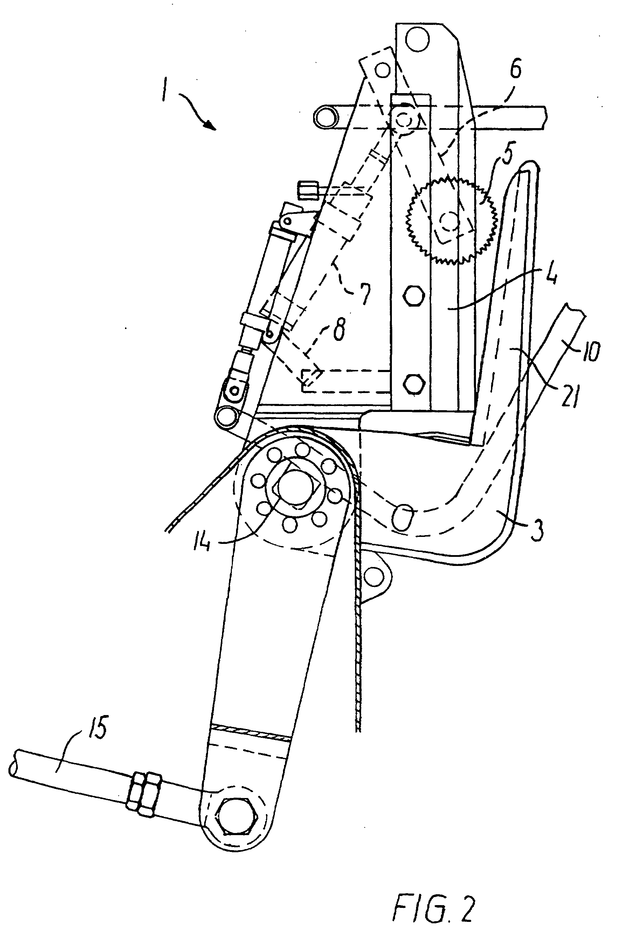

The apparatus shown in fig. 2 is the same as that shown in fig. 1, but where the displacement element 5 is in its most forward position, and where a force is thus applied to the belly in an area which corresponds to approx. 100 mm from the cutting line in the horizontal plane, and 25-35 mm from where the cut has reached in the vertical plane.

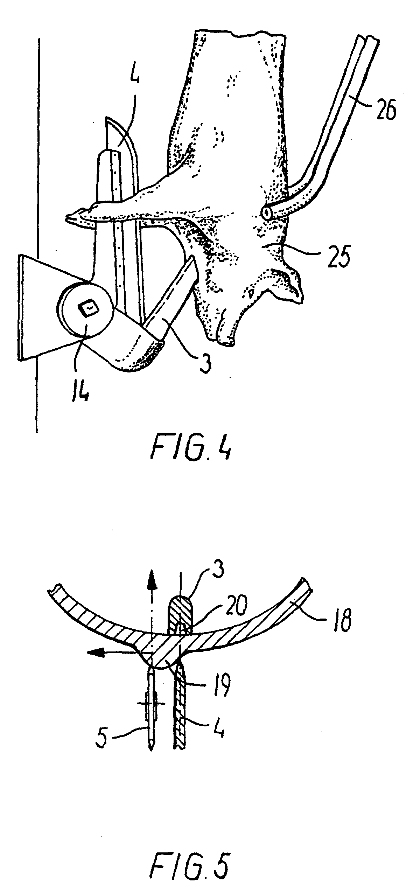

Fig. 4 shows the apparatus in perspective, from which the relationship between knife and pig 25 is seen. Here, the lower knife forms an angle of approx. 35° to the vertical plane. The pig 25 is supported at the back by yokes 26 for controlling the pig.

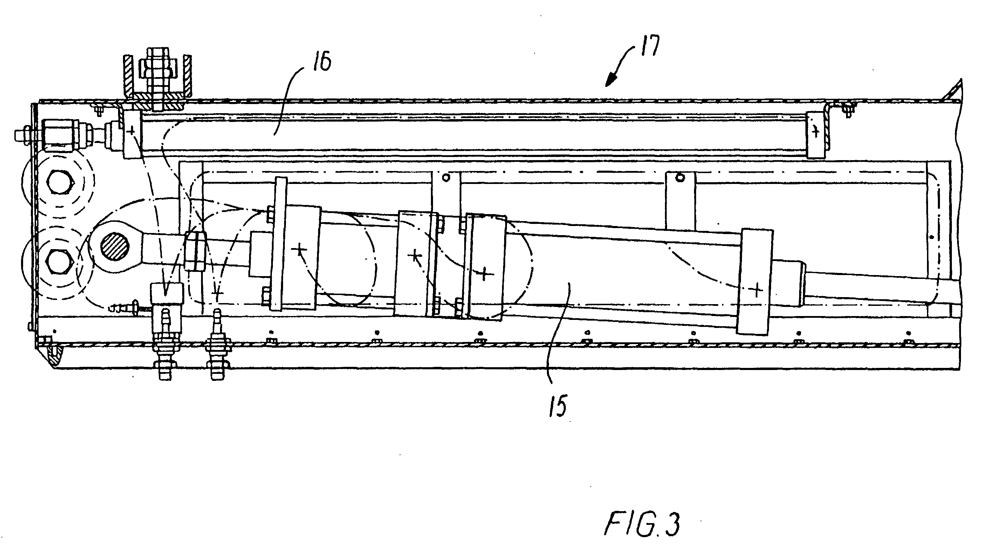

Fig. 3 shows the construction of the arm 17 on which the active part of the apparatus is mounted. This has a cylinder 15 which, as discussed earlier, upon activation effects the movement of the lower knife. The displacement of the apparatus 1 itself is effected by means of a fourth cylinder 16, and the whole construction is controlled by a control system which, however, is not shown in the drawing, but which functions in accordance with known principles. The length of the pig is measured before the cutting up, and from this it is calculated where the penis is situated, in accordance with which the activation of the displacement element is controlled.

It is thus important during the processing of the slaughtered animal that there is a counter-stop, which in this case consists of the lower knife, which in co-operation with the yokes 10 serves partly to ensure that the pig remains hanging immovably in relation to the actual cutting process, and partly to constitute this counter-stop when the application of the force takes place, so that the pig is not displaced under the violent stroke which is effected here against its belly. Finally, the object of the lower knife is to function during the cutting process, where the lower and upper knives are stationary in relation to one another during the actual cutting-up of the belly, up to where the breast bone is situated, where the lower knife is activated and by one or more scissors movement effects the cutting over of the breast bone.

With the apparatus described, there is thus achieved a completely automated process, unlike the known processes and apparatuses where it is necessary to carry out manual handling.

In connection with the slaughtering of the pigs, these will typically have the head and rectum areas cleaned, after which they are hung by their hind legs in an expedient position. The pigs thus hang in a row and are conveyed forward towards the cutting apparatus according to the invention. The cutting apparatus is fed forward to its position with the lower knife at an angle of approx. 35°.

Hereafter, the lower knife is turned to the vertical position, whereby it effects a cut in the breast bone. The lower knife is opened approx. 10° and is fed upwards corresponding to the last breast bone. Hereafter, a further cut is made and the lower knife is again opened to approx. 10°.

The knife is now led up to its correct position for co-operation with the upper knife, and with a vertical cutting movement now carries out a cutting-up of the belly, in that the belly of the pig slides over the lower knife and down against the vertical upper knife. The process is terminated with a cut.

When the cutting elements are at a certain distance from the penis, the displacement element 5 is activated, and this results in a force lying laterally to the advance of the knife and in an area in which the cutting has not yet been effected. This will take place when the tip of the lower knife on its way up is just below the root of the penis on the belly of the pig, and the displacement element is fed forward against the right-hand side of the penis root, whereby a force is applied. The application of this force gives rise to a displacement of the penis to the left, and the cutting elements continue past without effecting a cutting-through of the penis.

The displacement element is configured as a wheel with saw-teeth, so that upon contact with the pig's belly it is able to transfer the necessary force on a section of approx. 50/80 mm without any braking effect on the movement of the pig (the belly) down over the lower knife.

As soon as the cutting element_ has past the penis, the force is also removed, the result being that the skin falls back and the lower knife and the cutting continues to advance.

The apparatus consequently returns to its start position when the whole of the belly has been cut up, during which period the next pig is fed forward for processing. It is envisaged that the apparatus will be used especially for pigs, but it can naturally also find application in connection with other slaughtered animals where it is important to avoid the cutting-up of areas which can give rise to a contamination of the meat, and where it is possible to displace the relevant organs by means of a force such as this is disclosed with the invention.

The invention is only limited by the scope of the appended claims.

## Claims

1. Apparatus (1) for cutting up the belly of a slaughtered animal, comprising first means (2) for the implementation of the cutting function and a first element which during the cutting process is disposed under the surface of the belly, said apparatus (1) also comprising a displacement element (5) which during the cutting process applies a force to a predetermined area on the outer surface of the animal's belly and at a distance from the first means (2), **characterized in that** the displacement element (5) comprises a wheel which is pivotally mounted on an axle, said wheel being provided with friction-increasing means along its outer circumference or periphery, and **in that** the axle is mounted in such a manner that the wheel turns in the same direction as the cutting direction during the cutting process.

2. Apparatus (1) according to claim 1, **characterized in that** the axis of rotation is at right-angles to the cutting plane brought about during the cutting process.

3. Apparatus (1) according to claim 1 or 2, **characterized in that** the friction-increasing means consist of serrations, saw-teeth or the like.

4. Apparatus (1) according to any of the foregoing claims, **characterized in that** the first means (2) comprise a lower (3) and an upper (4) knife with against each other co-operating cutting edges, said upper knife (3) being mounted on the apparatus (1) in a stationary manner, and said lower knife (3) comprising means for changing the position of the lower knife (3) in relation to the upper knife (4) to bring about a scissors function.

5. Apparatus (1) according to claim 4, **characterized in that** the first element comprises the lower knife (3).

6. Apparatus (1) according to any of the foregoing claims, **characterized in that** the apparatus also comprises second means for securing or handling animal carcasses, said second means comprising a yoke-shaped profile (10) disposed on each side of the first means (2), said yoke-shaped profiles comprising means which bring about a rolling movement of the profiles in the same direction as the cutting direction.

7. Method for cutting up the belly of a slaughtered animal with a cutting apparatus,
said cutting apparatus comprising an element which is moved forward at a first angle to an abutment position in the pig's belly and under the surface of same, and cutting means for the implementation of the cutting function,
said cutting apparatus with the element being moved in a vertical cutting movement for the cutting up of the belly,
said element constituting an integrated part of the cutting means and comprising a lower knife,
said cutting apparatus comprising a displacement element (5) which is activated during the cutting and applies a force to the outer surface of the animal's belly in an area lying in front of that area in which the cutting has taken place, and displaced to the one side in relation to the vertical cutting line, and said force displaces the skin and associated organs,
**characterized in that** the force is applied by means of a pivotal wheel, the periphery of said wheel comprises friction-increasing means and which wheel, during the displacement, turns in the same direction as the direction of the cutting process.

8. Method according to claim 7, **characterized in that** the lower knife is moved in at least one scissors movement against an immovable upper knife in the area around the pig's breast bone.

9. Method according to claim 7 or 8, **characterized in that** the cutting apparatus comprises holding and handling elements which during the cutting and in the cutting direction effect a rotating or rolling movement in abutment with the pig's belly and following the speed of the cutting function.

10. Use of an apparatus and a method according to any of the foregoing claims for slaughtered pigs.

## Patentansprüche

1. Gerät (1) zum Aufschneiden des Bauches eines geschlachteten Tieres mit einer ersten Einrichtung (2) zur Verwirklichung der Schneidefunktion und einem ersten Element, das während des Schneideprozesses unter der Bauchoberfläche angeordnet ist, wobei das Gerät (1) ferner ein Verschiebungselement (5) aufweist, das während des Schneideprozesses eine Kraft auf einen vorbestimmten Bereich an der Außenfläche des Tierbauchs und in einem Abstand von der ersten Einrichtung (2) ausübt, **dadurch gekennzeichnet, daß** das Verschiebungselement (5) ein schwenkbar auf einer Achse befestigtes Rad aufweist, das mit reibungssteigernden Mitteln längs seines äußeren Umfangs oder seiner Peripherie ausgerüstet ist, und daß die Achse so befestigt ist, daß sich das Rad während des Schneideprozesses in Richtung der Schneidebewegung dreht.

2. Gerät (1) nach Anspruch 1, **dadurch gekennzeichnet, daß** die Rotationsachse in rechtem Winkel zu der während des Schneideprozesses entstehenden Schneideebene steht.

3. Gerät (1) nach Anspruch 1 oder 2, **dadurch gekennzeichnet, daß** die reibungssteigernden Mittel in Auszackungen, Sägezähnen oder dergleichen bestehen.

4. Gerät (1) nach einem der vorstehenden Ansprüche, **dadurch gekennzeichnet, daß** die erste Einrichtung (2) ein unteres (3) und ein oberes (4) Messer mit gegeneinander arbeitenden Schneidekanten aufweist, wobei das obere Messer (3) stationär an dem Gerät (1) befestigt ist, und das untere Messer (3) eine Einrichtung zum Ändern seiner Position bezüglich des oberen Messers (4) aufweist, um eine Scherenfunktion zu Stande zu bringen.

5. Gerät (1) nach Anspruch 4, **dadurch gekennzeichnet, daß** das erste Element das untere Messer (3) enthält.

6. Gerät (1) nach einem der vorstehenden Ansprüche, **dadurch gekennzeichnet, daß** das Gerät außerdem eine zweite Einrichtung zum Festhalten oder Handhaben von Tierkadavern aufweist, wobei die zweite Einrichtung ein auf jeder Seite der ersten Einrichtung (2) angeordnetes, jochförmiges Profil (10) mit Mitteln zum Bewirken einer Rollbewegung des Profils in Richtung der Schneidebewegung aufweist.

7. Verfahren zum Aufschneiden des Bauches eines geschlachteten Tiers mit einem Schneidegerät, wobei
das Schneidegerät ein Element, das vorwärts in einem ersten Winkel zu einer Anschlagposition in dem Schweinebauch und unter dessen Oberfläche bewegt wird, und eine Schneideeinrichtung zur Verwirklichung der Schneidefunktion aufweist,
das Schneidegerät mit dem Element zum Aufschneiden des Bauches in einer vertikalen Schneidebewegung bewegt wird,
das Element einen integralen Bestandteil der Schneideeinrichtung darstellt und ein unteres Messer aufweist,
das Schneidegerät ein Verschiebungselement (5) aufweist, das während des Schneidens aktiviert wird und eine Kraft auf die Außenfläche des Tierbauches in einem Bereich ausübt, der vor dem Bereich liegt, in dem das Schneiden erfolgt ist, und
das zu der einen Seite bezüglich der vertikalen Schneidelinie versetzt ist, wobei die Kraft die Haut und zugehörige Organe verschiebt,
**dadurch gekennzeichnet, daß** die Kraft mittels eines schwenkbaren Rads ausgeübt wird, dessen Peripherie reibungssteigernde Mittel aufweist und das sich während der Verschiebung in Richtung der Schneidebewegung dreht.

8. Verfahren nach Anspruch 7, **dadurch gekennzeichnet, daß** das untere Messer in wenigstens einer Scherenbewegung gegen ein unbewegliches oberes Messer in dem Bereich um das Brustbein des Schweins bewegt wird.

9. Verfahren nach Anspruch 7 oder 8, **dadurch gekennzeichnet, daß** das Schneidegerät Halte- und Handhabungselemente aufweist, die während des Schneidens und in der Schneiderichtung eine Dreh- oder Rollbewegung in Anschlag mit dem Schweinebauch bewirken und der Geschwindigkeit der Schneidefunktion folgen.

10. Verwendung eines Geräts und eines Verfahrens nach einem der vorstehenden Ansprüche bei geschlachteten Schweinen.

## Revendications

1. Dispositif (1) de découpe de ventre d'un animal abattu, comprenant des premiers moyens (2) pour la réalisation de la fonction de découpage et un premier élément qui, durant le procédé de découpage, est disposé sous la surface du ventre, ledit dispositif (1) comprenant également un élément de déplacement (5), qui, durant le procédé de découpe, applique une force dans une zone prédéterminée sur la surface extérieure du ventre de l'animal et à une distance des premiers moyens (2), **caractérisé en ce que** l'élément de déplacement (5) comprend une roue qui est montée principalement sur un axe, ladite roue étant prévue avec des moyens d'accroissement de la friction le long de sa périphérie ou circonférence extérieure, et **en ce que** l'axe est monté d'une manière à ce que la roue tourne dans la même direction que la direction de découpe durant le procédé de découpe.

2. Dispositif (1) selon la revendication 1, **caractérisé en ce que** l'axe de rotation est à angle droit par rapport au plan de découpe provoqué durant le procédé de découpage.

3. Dispositif (1) selon la revendication 1 ou 2, **caractérisé en ce que** les moyens d'accroissement de la friction consistent en des dentelures, dents de scie ou de même.

4. Dispositif (1) selon l'une des revendications précédentes, **caractérisé en ce que** les premier moyens (2) comprennent un couteau inférieur (3) et supérieur (4) avec des bords de découpe opposés l'un à l'autre coopérants, ledit couteau supérieur (3) étant monté sur le dispositif (1) d'une manière stationnaire et ledit couteau inférieur (3) comprenant des moyens pour modifier la position du couteau inférieur (3) par rapport au couteau supérieur (4) pour réaliser une fonction de ciselage.

5. Dispositif (1) selon la revendication 4, **caractérisé en ce que** le premier élément comprend le couteau inférieur (3).

6. Dispositif (1) selon l'une des revendications précédentes, **caractérisé en ce que** le dispositif comprend également des seconds moyens pour fixer ou manipuler les carcasses des animaux, lesdits seconds moyens comprenant un profilé en forme de support (10) disposé sur chaque côté des premiers moyens (2), lesdits profilés en forme de support comprenant des moyens qui provoquent un mouvement de roulement des profilés dans la même direction que la direction de découpe.

7. Méthode de découpe de ventre d'un animal abattu avec un dispositif de découpe,
ledit dispositif de découpe comprenant un élément qui est avancé selon un premier angle vers une position en contact du ventre du cochon et sous sa surface, et des moyens de découpe pour la réalisation de la fonction de découpe,
ledit dispositif de découpe avec l'élément étant déplacés selon une direction de découpe verticale pour la découpe du ventre,
ledit élément constituant une partie intégrée des moyens de découpe et comprenant un couteau inférieur,
ledit dispositif de découpe comprenant un élément de déplacement (5) qui est actionné durant le découpage et applique une force sur la surface extérieure du ventre de l'animal dans une zone se situant face à la zone dans laquelle la découpe a lieu, et déplacé vers un côté par rapport à la ligne de découpe verticale, et ladite force déplace la peau et les organes associés,
**caractérisé en ce que** la force est appliquée aux moyens d'une roue centrale, dont la circonférence comprend des moyens d'accroissement de la friction et qui, durant le déplacement, tourne dans la même direction que la direction du procédé de découpe.

8. Méthode selon la revendication 7, **caractérisée en ce que** le couteau inférieur est déplacé selon au moins un mouvement de ciselage par rapport à un couteau supérieur immobile dans la zone entourant le sternum du cochon.

9. Méthode selon la revendication 7 ou 8, **caractérisée en ce que** le dispositif de découpe comprend des éléments de maintien et de manipulation qui durant le découpage et selon la direction de découpe réalisent un mouvement pivotant ou de roulement en contact avec le ventre du cochon et en fonction de la vitesse de la fonction de découpe.

10. Utilisation d'un dispositif et d'une méthode selon l'une des revendications précédentes pour des cochons abattus.
